# EUROPEAN PATENT SPECIFICATION

(11) **EP 0 592 246 B1**
(45) Date of publication and mention of the grant of the patent: **23.04.1997**
(21) Application number: 93308033.5
(22) Date of filing: 08.10.1993
(51) Int. Cl.: B60S 1/38, F16C 11/04

(54) **Pivot joint**
Drehverbindung
Joint d'articulation

(30) Priority: 09.10.1992 GB 9221261
(43) Date of publication of application: 13.04.1994
(73) Proprietor: TRICO LIMITED, Gwent NP4 0XZ, Wales (GB)
(72) Inventor: Harris, Alan William, Twickenham, Middlesex TW2 7NW (GB)
(74) Representative: James, Michael John Gwynne

(56) References cited:
- EP-A- 0 267 010
- EP-A- 0 378 920
- FR-A- 2 443 949
- GB-A- 2 048 658
- GB-A- 2 202 899
- GB-A- 2 220 844

## Description

This invention relates to a pivot joint which is particularly but not exclusively useful in the manufacture of a joint between the yokes or levers of a windscreen wiper blade.

In the manufacture of windscreen wipers, a number of pivot joints are used, particularly between the arm and blade and between the various yokes and/or levers of the blade itself.

Problems exist in the manufacture of windscreen wipers due to the necessity, very often, of pivoting metal parts together. These tend to be noisy and have a tendency to suffer from wear and corrosion. Various proposals have been made for overcoming these problems, for example, by the provision of plastics members between the metal of the joints but while these various joints have proved generally satisfactory, there is room for significant improvement.

In our prior patent number GB-A-2038167, there was described and claimed the provision of a plastic joint body between primary and secondary yokes of a blade harness in which the yokes or levers were of a generally channel shape in the region of the pivot joint, the joint body having oppositely arranged trunnions which passed into apertures in both the primary and secondary yoke or lever, thereby connecting all three parts together without there being any metal parts in contact.

This prior pivot joint has been successfully manufactured for a number of years and is in current production today.

However, over the years, problems have arisen with manufacturing plant and the alignment of the trunnions with apertures in the primary yokes. Final assembly requires a post forming operation to clinch the sides of the primary yoke onto the joint body so that the exterior trunnions of the joint body fit snugly into the apertures in the primary yoke. Furthermore, as manufacturing specifications increase, a twisting movement between the yokes of the windscreen wiper blade, which to an extent has been tolerated in the past, is no longer acceptable today.

The present invention seeks to provide a joint body and a pivot joint assembly in which some or all of the above problems are obviated or substantially reduced.

According to the invention, from one aspect there is provided a joint body for pivotally connecting two members, the first of which is of a channel section at least in the area of the joint and is adapted to receive the second member within the channel section, the joint body in cross-section being substantially in the form of a channel and having first connection means in opposite internal side walls of said channel for connection to the second member to be pivoted which is intended to lie within said channel of the joint body and second connection means in opposite external side walls of said channel, aligned with the first connection means and for connection to the first member to be pivoted which is intended to lie, at least in part, around the outside of said channel of the joint body, characterised in that the two connection means comprise trunnion members of which at least one pair is of frusto-conical shape, the respective first or second member having frusto-conical recesses or apertures of complementary shape.

According to a second aspect of the invention there is provided a pivot joint assembly comprising a first member which is of channel section at least at one end, a second member pivotable to said one end of the first member and adapted to sit within the channel section of the first member with a clearance and the joint body of the invention as hereinbefore defined, positioned between and pivotally interconnecting said first and second members.

The frusto-conical recess may be formed by pushing outwardly the material of the member concerned so as to leave behind the appropriately shaped recess. Such an operation may suitably carried out by means of a press tool.

Preferably the frusto-conical connection means are arranged between the joint body and the member which is intended to surround it.

The invention will now be described in greater detail, by way of example, with reference to the drawings, in which:-
Figure 1 is a perspective view of one form of pivot joint in accordance with the invention;
Figure 2 is a perspective view of the joint body used in the pivot joint of figure 1, and
Figure 3 is a transverse sectional view of the joint taken on the line **III-III** of Figure 1.

In the drawings, there is shown a joint **1** formed between two members **3** and **5**, suitably main or primary and secondary yoke respectively of a windscreen wiper blade harness. These yokes would normally be made of channel section metal.

Pivot joint **1** comprises a plastics joint body **7** which is of generally channel section having two pairs of generally aligned connections **9** and **11**, the first (**9**) of which is intended to make pivotal connection to the secondary yoke **5** while the second (**11**) of which is intended to make connection to the main yoke (**3**).

Both of the connections **9** and **11** comprise aligned trunnion members, the first connection **9** comprising trunnion members **15** extending inwardly from the inner walls **17** of the channel of the joint body **7** while the second connection means 11 comprise a pair of trunnions **19** extending outwardly from the outside of the walls **21** of the channel of the joint body **7**.

As shown in the drawings, the inner trunnions **15** of the first connection means **9** are of substantially cylindrical shape whereas the outer pair of trunnions **19** of the second connection means **11** have a frusto-conical form. In order to provide connection between the trunnions and the respective yokes, the secondary yoke **5** is provided with circular apertures **23** through which the trunnions **15** pass while the primary yoke **3** is provided with frusto-conical recesses **25** formatting with the frusto-conical trunnions **19**.

It will be seen that the primary yoke **3** at these points is effectively thickened in section and this will normally be achieved by partially punching out the recesses **25** so as to push the material of the primary yoke **3** outwards and form a bubble of blister **27** on the exterior thereof. This operation can be carried out during the usually press shaping or forming of the primary yoke.

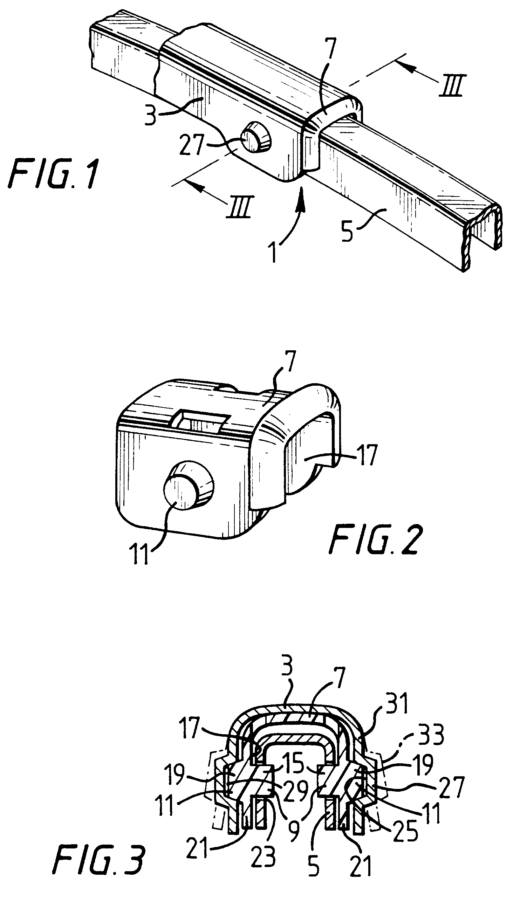

Figure 3 shows that, when the joint is assembled, the frusto-conical trunnions **19** do not extend for the full length of the recess **25** leaving a small gap **29** between the ends of the trunnions **19** and the wall of the primary yoke **3** and allows the position of the trunnions **19** to find their own depth within the recess **25**, thus making it possible to take up manufacturing tolerances.

The assembly of the joint will now be described:-

Firstly the primary and secondary yokes **3** and **5** are formed to the desired shape, suitably by means of a forming press during which operation, the apertures **23** are formed in the secondary yoke **5** and the recesses **25** are formed in the primary yoke **3**. It is to be observed that while the secondary yoke **5** is completely formed in the initial forming operation, the primary yoke **3** has its sides **31**, at least in the region of the joint **1**, splayed outwardly as shown in chain lines in Figure 3 at **33**. The joint body **7**, which is a plastics moulding, is produced, suitably by injection moulding.

With the parts so constructed, the joint body **7** is placed above the secondary yoke **5** with its inner trunnions **15** aligned with the apertures **23** in the secondary yoke, and the joint body **7** is pushed downwardly over the subsidiary yoke **5**, splaying apart the sides of its channel until the inner trunnions **15** arrive at and enter the apertures **23** in the secondary yoke **5**.

The secondary yoke **5** together with the joint body **7** is then offered up into the channel of the main yoke **3** where upon the primary yoke **3** is subject to a lateral pressing action so as to move in the sides **33** of the channel, which were splayed outwards, so as to take up the parallel form shown in full lines in Figure 3. In this position, the outer trunnions **19** will have entered the frusto-conical recesses **25** formed in the primary yoke **3**. The joint is then completed.

It will be appreciated that various modifications may be made to the above described embodiment, without departing from the scope of the invention as defined in the claims.

For example, both of the connection means may have frusto-conical trunnions which mate with recesses in both of the two yokes or alternatively, if only one set of frusto-conical trunnions is required, these could be used between the joint body and the secondary yoke instead of between the joint body and the main or primary yoke. While the connection which uses the frusto-conical trunnions is in the form of a blind recess, it will be appreciated that the blind recess could be replaced by the use of frusto-conically shaped apertures.

While the pivot joint as described relates to a joint between a primary yoke or lever and a secondary yoke or lever, it will be understood that the joint could be between yokes or levers further down the chain, e.g.: between secondary and tertiary yokes or levers.

From the forgoing it will be seen that the invention provides a pivot joint which is suitable for use in the manufacture of windscreen wiper blades, in which a certain amount of manufacturing tolerances can be taken up, resulting in a more ridged and less twistable pivot joint.

While the pivot joint has been described as part of windscreen wiper blade, it will be understood that the invention can applied to any other suitable type of pivot point in which the type of construction shown can be used.

## Claims

1. A joint body (7) for pivotally connecting two members (3, 5), the first (3) of which is of a channel section at least in the area of the joint and is adapted to receive the second member (5) within the channel section, the joint body (7) in cross-section being substantially in the form of a channel and having first connection means (9) in opposite internal side walls (17) of said channel for connection to the second member (5) to be pivoted which is intended to lie within said channel of the joint body (7) and second connection means (11) in opposite external side walls (21) of said channel, aligned with the first connection means (9) and for connection to the first member (3) to be pivoted which is intended to lie, at least in part, around the outside of said channel of the joint body (7), characterised in that the two connection means (9, 11) comprise trunnion members (15, 19) of which at least one pair (19) is of frusto-conical shape, the respective first or second member (3, 5) having frusto-conical recesses or apertures (25) of complementary shape.

2. A pivot joint assembly (1) comprising a first member (3) which is of channel section at least at one end, a second member (5) pivotable to said one end of the first member (3) and adapted to sit within the channel section of the first member (3) with a clearance and the joint body (7) of Claim 1, positioned between and pivotally interconnecting said first and second members (3, 5).

3. A pivot body or pivot joint assembly as claimed in claim 1 or 2, characterised in that a frusto-conical recess (25) is formed by pushing outwardly the material of the member (3 or 5) concerned so as to leave behind the appropriately shaped recess (25).

4. A pivot body or pivot joint assembly as claimed in any of the preceding claims, characterised in that the frusto-conical connection means (11) are arranged between the joint body (7) and the member (3) which is intended to surround it.

## Patentansprüche

1. Verbindungskörper (7) zum schwenkbaren Anschluß zweier Elemente (3, 5), von denen das erste (3) zumindest im Verbindungsbereich einen kanalförmigen Querschnitt besitzt und das zweite Element (5) innerhalb des Kanalabschnittes aufzunehmen vermag, wobei der Verbindungskörper (7) im Querschnitt im wesentlichen die Form eines Kanals besitzt mit einem ersten Anschlußkörper (9), der den Innenwandungen (17) des Kanals gegenüberliegt zum Anschluß an das zweite (zu schwenkende) Element (5), welches innerhalb des Kanals des Verbindungskörpers (7) liegt, sowie einem zweiten Anschlußkörper (11) der den äußeren Seitenwandungen (21) des Kanals gegenüberliegt und auf den ersten Anschlußkörper (9) augerichtet ist zum Anschluß an das erste zu schwenkende Element (5), welches zumindest teilweise die Außenseite des Kanals des Verbindungskörpers (7) umgreift,
**dadurch gekennzeichnet,**
daß die beiden Anschlußkörper (9, 11) Drehzapfen (15, 19) umfassen, von denen zumindest ein Paar (19) kegelstumpfförmig ausgebildet ist, wobei das entsprechende erste oder zweite Anschlußelement (3, 5) kegelstumpfförmige Ausnehmungen oder Öffnungen (25) komplementärer Form besitzt.

2. Drehverbindung (1) mit einem ersten Element (3), welches zumindest an einem Ende einen kanalförmigen Querschnitt besitzt, einem zweiten Element (5), welches schwenkbar an dem Ende des ersten Elementes (3) gehalten und in den kanalförmigen Abschnitt des ersten Elementes (3) aufgenommen ist mit einem Zwischenraum, wobei sich der Verbindungskörper (7) gemäß Anspruch 1 zwischen dem ersten und dem zweiten Element (3, 5) befindet und diese schwenkbar verbindet.

3. Verbindungskörper oder Drehverbindung nach den Ansprüchen 1 oder 2, dadurch gekennzeichnet, daß eine kegelstumpfförmige Vertiefung (25) gebildet wird durch ein Nachaußenpressen des Materials der entsprechenden Elemente (3 oder 5) zur Bildung einer entsprechend geformten Ausnehmung (25).

4. Verbindungskörper oder Drehverbindung nach einem der vorangehenden Ansprüche, dadurch gekennzeichnet, daß die kegelstumpfförmigen Anschlußkörper (11) zwischen dem Verbindungskörper (7) und dem Element (3), welches dieses umgeben soll, angeordnet sind.

## Revendications

1. Corps d'articulation (7) destiné à connecter de façon pivotante deux éléments (3,5) dont le premier (3) est d'une section en U au moins dans la zone de l'articulation et est adapté pour recevoir le second élément (5) à l'intérieur de la section en U, le corps d'articulation (7) en section transversale se présentant sensiblement sous la forme d'un U et ayant un premier moyen de connexion (9) dans des parois latérales internes opposées (17) dudit U en vue de la connexion au second élément (5) à faire pivoter qui est destiné à s'étendre à l'intérieur dudit U du corps d'articulation (7), et un second moyen de connexion (11) dans des parois latérales externes opposées (21) dudit U, aligné avec le premier moyen de connexion (9) et en vue d'une connexion au premier élément (3) à faire pivoter qui est destiné à s'étendre, au moins en partie, autour de l'extérieur dudit U du corps d'articulation (7), caractérisé par le fait que les deux moyens de connexion (9,11) comprennent des éléments de tourillon (15,19), dont au moins une paire (19) est de forme tronconique, le premier ou second élément respectif (3,5) ayant des cavités ou ouvertures tronconiques (25) de forme complémentaire.

2. Ensemble d'articulation à pivot (1), comprenant un premier élément (3) qui est de section en U au moins à l'une de ses extrémités, un second élément (5) monte à pivotement par rapport à ladite extrémité précitée du premier élément (3) et adapté pour se situer à l'intérieur de la section en U du premier élément (3) avec un espace intermédiaire, et le corps d'articulation (7) de la revendication 1, positionné entre et interconnectant de façon pivotante lesdits premier et second éléments (3,5).

3. Corps d'articulation ou ensemble d'articulation à pivot selon l'une des revendications 1 ou 2, caractérisé par le fait qu' une cavité tronconique (25) est formée en poussant vers l'extérieur la matière de l'élément (3 ou 5) concerné de façon à laisser la cavité (25) conformée de façon appropriée.

4. Corps d'articulation ou ensemble d'articulation à pivot selon l'une quelconque des revendications précédentes, caractérisé par le fait que les moyens de connexion tronconiques (11) sont disposés entre le corps d'articulation (7) et l'élément (3) qui est destiné à l'entourer.
